Europäisches Patentamt

European Patent Office

Office européen des brevets

(11) Veröffentlichungsnummer: **0 218 059**
**A1**

## (12) EUROPÄISCHE PATENTANMELDUNG

(21) Anmeldenummer: **86111462.7**

(22) Anmeldetag: **19.08.86**

(51) Int. Cl.⁴: **B65G 1/06**

(30) Priorität: **10.09.85 DE 3532181**

(43) Veröffentlichungstag der Anmeldung:
**15.04.87 Patentblatt 87/16**

(84) Benannte Vertragsstaaten:
**BE DE FR GB IT**

(71) Anmelder: **Untertage Maschinenfabrik
Dudweiler GmbH
Im Tierbachtal 28-36
D-6602 Dudweiler (Saar)(DE)**

(72) Erfinder: **Willmann, Eberhard
Lessingstrasse 9
D-6601 Riegelsberg(DE)**
Erfinder: **Freyler, Rudolf
Elversberger Strasse 35
D-6605 Friedrichstal(DE)**

(74) Vertreter: **Vollbach, Hans, Dipl.-Ing. et al
Patentanwälte Dipl.-Ing. Buschhoff Dipl.Ing
Hennicke Dipl.-Ing. Vollbach
Kaiser-Wilhelm-Ring 24
D-5000 Köln 1(DE)**

(54) **Einrichtung zur Lagerung von Paletten u.dgl.**

(57) Die Erfindung betrifft eine Einrichtung zur Lagerung von beladenen Paletten oder sonstigen Lagergütern, bestehend aus einer Tragsäule (1), die im Abstand übereinander Tragelemente (4) aufweist, die durch die Säule bildende, kasten-oder rohrförmige Zwischenteile (5) in ihrem Höhenabstand zueinander fixiert sind. Die Tragelemente (4) weisen radiale Tragarme (13) auf, die jeweils mindestens einen als Regalfach ausgebildeten Stellplatz für Paletten u.dgl. bilden. Die Tragsäule (1) ist vorzugsweise als Drehturm ausgeführt. Sie läßt sich nach dem Baukastenprinzip aus vorgefertigten Einzelteilen montieren. Mehrere Tragsäulen bzw. Drehtürme können zu einem Lagerregal größerer Lagerkapazität zusammengestellt werden.

FIG.1

## Einrichtung zur Lagerung von Paletten u.dgl.

Die Erfindung betrifft eine Einrichtung zur Lagerung von Paletten und sonstigen Lagergütern mit übereinander angeordneten Regalfächern.

In der Praxis ergibt sich vor allem in Montage- und Fertigungsbetrieben sowie in Vorrats-und Verkaufslagern u.dgl. das Problem, mit unterschiedlichen Lagergütern beladene Paletten in einem Palettenlager einzulagern. Bekannt sind für diese Zwecke Palettenregale, die mehrere übereinander angeordnete Regalfächer für die Aufnahme der beladenen Paletten aufweisen. Die Palettenregale werden ortsfest in den Lagerräumen aufgestellt. Sie werden als Schwerlastregale ausgeführt, wenn schwere Lagergüter, wie Maschinen und Maschinenteile u.dgl., eingelagert werden müssen.

Aufgabe der Erfindung ist es, eine zur Lagerung von Paletten und/oder sonstigen Lagergütern bestimmte, am Aufstellungsort normalerweise ortsfest angeordnete Regaleinrichtung zu schaffen, die sich in ihrem Aufbau den jeweiligen Forderungen und betrieblichen Gegebenheiten gut anpassen läßt, bei großer Lagerkapazität eine kleine Grundfläche benötigt und sich überdies durch gute Zugänglichkeit und Zugriffmöglichkeit zu den einzelnen abgestellten Paletten oder sonstigen Lagergütern auszeichnet. Dabei soll die Einrichtung in bevorzug ter Ausgestaltung auch so ausgebildet sein, daß sie sich aus einheitlichen, vorgefertigten Bauteilen in der jeweils gewünschten Ausführung mit möglichst geringem Montageaufwand am Einsatzort zusammenbauen läßt.

Die vorgenannte Aufgabe wird erfindungsgemäß dadurch gelöst, daß die Regaleinrichtung als Tragsäule ausgebildet ist, die in mehreren Etagen übereinander Tragelemente aufweist, die um die Säulenachse herum gruppierte Stellplätze für die Paletten u.dgl. bilden.

Diese Ausgestaltung der Regaleinheit als Tragsäule ermöglicht eine Freiaufstellung der Tragsäule an beliebiger Stelle eines Lagerraumes oder Fertigungsbetriebs u.dgl. bei zugleich guter Anpaßbarkeit der Tragsäule an die jeweiligen räumlichen und betrieblichen Gegebenheiten. Während die Tragsäule im allgemeinen ortsfest aufgestellt wird, kann sie im Bedarfsfall aber auch als Fahrregal ausgeführt werden. Die Tragsäule kann je nach Bedarf eine unterschiedlich große Anzahl an übereinander angeordneten Paletten-Tragelementen aufweisen, wobei ohne Schwierigkeiten auch eine Anpassung des Höhenabstandes der Tragelemente an die Ladehöhe der Paletten bzw. die Höhe der einzulagernden Lagergüter möglich ist. Zugleich läßt sich eine beliebige Anzahl gleichartiger Tragsäulen in unterschiedlicher Gruppierung und Zuordnung zueinander zu einem Palettenlager größerer Aufnahmekapazität zusammenstellen. Auf einer möglichst kleinen Grundfläche läßt sich dabei eine größtmögliche Anzahl an beladenen Paletten unterbringen, d.h. die erfindungsgemäße Einrichtung benötigt bei großer Lagerkapazität eine vergleichsweise kleine Grundfläche. Die eingelagerten Paletten oder sonstigen Lagergüter sind an der Tragsäule ohne weiteres zugänglich. Die Tragsäule läßt sich ohne übermäßigen Montageaufwand am Aufstellungsort aus vorgefertigten, standardisierten Bauteilen verwendungsgerecht montieren, wobei auch eine nachträgliche Änderung der Lagerkapazität oder eine sonstige Umrüstung in Anpassung an Menge und Art des Lagerguts möglich ist. Die Tragsäule läßt sich bei vergleichsweise kleinem Eigengewicht so ausgestalten, daß sie eine hohe Tragfähigkeit aufweist, die in der Größenordnung von 1 t bis zu 100 t und mehr betragen kann.

In bevorzugter Ausführung ist die Tragsäule als ein um seine Vertikalachse drehbarer Drehturm ausgebildet. Dabei kann das Be-und Entladen der Tragsäule von ein und derselben Seite her erfolgen, obwohl nichts im Wege steht, das Beladen und Entladen von verschiedenen Seiten her durchzuführen. In der bevorzugten Ausführung als Drehturm wird die Tragsäule zweckmäßig auf einem Drehgestell montiert, das vorzugsweise aus einem stabilen Grundrahmen mit einer Kugeldrehverbindung od.dgl. besteht. Die Drehbewegung des gesamten Drehturms kann von Hand oder bevorzugt mittels eines besonderen Drehantriebs bewirkt werden, der am Unterbau des Drehturms angeordnet werden kann.

In weiterer bevorzugter Ausführung der Erfindung besteht die Tragsäule aus achsgleich übereinander angeordneten Zwischenteilen und den zwischen diesen eingeschalteten Tragelementen. Eine solche Tragsäule läßt sich in vorteilhafter Weise aus standardisierten Einzelteilen, nämlich den genannten Zwischenteilen und den von diesen in ihrem Vertikalabstand zueinander distanzierten Tragelementen zusammenbauen, wobei sich durch die Wahl der Höhe der Zwischenteile der jeweilige Abstand der Tragelemente zueinander einstellen und der Ladehöhe der jeweiligen Paletten bzw. der Höhenabmessung des einzulagernden Lagergutes anpassen läßt. Die Tragsäule besteht in dieser bevorzugten Ausführung als aus einer mehr oder weniger großen Anzahl aufeinandergesetzter und miteinander verbundener, formstabiler Einzelteile, die sich nach dem Baukastenprinzip zusammenstellen und montieren lassen. Zur Erzielung einer mög lichst einfachen Montage und/oder Demontage oder Umrüstung vorteilhaft ist es, wenn die Tragelemente und die Zwischenteile leicht lösbar miteinander verbunden werden, zweckmäßig mittels Schraubverbindungen.

Die vorgenannten Zwischenteile bestehen vorzugsweise aus formstabilen Tragkästen oder Rohrabschnitten, die zweckmäßig am oberen und unteren Ende jeweils mit einem Montageflansch, vorzugsweise in Gestalt eines Innenflansches, versehen sind. Eine fertigungstechnisch besonders einfache Ausgestaltung der formstabilen Zwischenteile ergibt sich, wenn diese jeweils aus vier gleichen gekanteten Winkelblechen gebildet werden, die anschließend zu dem Tragkasten miteinander verschweißt werden. Dabei werden die Kastenecken zweckmäßig durch eingeschweißte Profilleisten, wie insbesondere Winkelprofile, ausgesteift. Bei Schraubverbindung der Tragelemente und der Zwischenteile erhalten die Montageflansche entsprechende Schraubenlöcher.

Die Tragelemente werden zweckmäßig mit radial zur Säulenachse gerichteten, die Lagergut-Stellplätze bildenden Tragarmen versehen, die vorteilhafterweise, bezogen auf die Säulenachse, in kreuz-oder sternförmiger Anordnung an den Tragelementen vorgesehen werden. Dabei können an jedem Tragarm ggf. auch zwei oder mehr Paletten-Stellplätze od.dgl. parallel nebeneinander angeordnet werden. Im übrigen empfiehlt es sich, die Tragelemente ebenfalls in Kastenbauweise aus verschweißten Profilen, vorzugsweise einfachen Winkelprofilen, herzustellen. Die Tragelemente erhalten zweckmäßig an ihrer Ober-und Unterseite ebene Anlageflächen für die Zwischenteile bzw. deren Montageflansche. Die Anordnung wird weiterhin vorteilhafterweise so getroffen, daß die Tragelemente bzw. deren Tragarme Regalfächer aufweisen, die durch aufragende parallele Seitenwände gebildet werden, wobei diese Seitenwände Seitenführungen beim Einschieben der Paletten od.dgl. bilden. Zur Er leichterung des Einführens der Paletten oddgl. weisen die Tragelemente vorteilhafterweise an ihrer Einführungsseite besondere Einführungsstücke auf, die sich nach außen trichterförmig erweitern. Diese Einführungsstücke werden vorzugsweise als verschleißfeste Gußstücke ausgeführt.

Das Beladen der Tragsäule mit den Paletten oder sonstigen Lagergütern kann mit Hilfe herkömmlicher Vorrichtungen, z.B. mit Hilfe von Gabelstaplern od.dgl., bewerkstelligt werden. Insbesondere bei großen Höhen der Tragsäulen, die den Hub der herkömmlichen Gabelstapler überschreiten, empfiehlt es sich, der Tragsäule eine besondere Be-und Entladevorrichtung zuzuordnen, die aus einem an einer Vertikalführung geführten Hubwagen od.dgl. bestehen kann, der mindestens einen horizontalbeweglichen Tragarm aufweist.

Die Erfindung wird nachfolgend im Zusammenhang mit den in der Zeichnung dargestellten Ausführungsbeispielen näher erläutert. In der Zeichnung zeigen:

Fig. 1 in Seitenansicht, teilweise im Vertikalschnitt, eine als Drehturm ausgebildete erfindungsgemäße Tragsäule nebst einer zugeordneten Be-und Entladevorrichtung;

Fig. 2 in größerem Maßstab den Unterbau der Tragsäule nach Fig. 1 im Vertikalschnitt zusammen mit dem Drehantrieb;

Fig. 3 eine Draufsicht auf die Tragsäule nach Fig. 1;

Fig. 4 ein einzelnes Zwischenteil der Tragsäule in Seitenansicht, teilweise aufgebrochen und im Schnitt;

Fig. 5 das Zwischenteil nach Fig. 4 im Querschnitt (linke Bildhälfte) und in Draufsicht (rechte Bildhälfte);

Fig. 6 und 7 zwei Ausführungsformen eines Tragelementes in Draufsicht.

Die in der Zeichnung dargestellte Tragsäule 1 für die Einlagerung von beladenen Paletten 2 ist nach dem Baukastenprinzip aus vorgefertigten Einzelteilen zusammengebaut, die aufeinandergesetzt und miteinander fest verbunden werden. Die Tragsäule besteht aus einem Unterbau 3, Tragelementen 4, die in der jeweils gewünschten Anzahl im gewünschten Vertikalabstand zueinander angeordnet sind, und Zwischenteilen 5, die zwischen den Tragelementen 4 achsgleich übereinander angeordnet sind und Tragelemente in dem gewünschten Vertikalabstand zueinander distanzieren. Die Tragelemente 4 bilden in mehreren Etagen übereinander Paletten-Stellplätze, die um die Säulenachse herum gruppiert sind.

Die Tragsäule 1 ist bei dem dargestellten bevorzugten Ausführungsbeispiel als ein um die Vertikalachse drehbarer Drehturm ausgebildet. Der Unterbau 3 besteht aus einem stabilen Grundrahmen 6, der am Boden 7 verankerbar ist und ein Drehgestell 8 mit einer Kugeldrehverbindung aufweist, auf dem die von den Teilen 4 und 5 gebildete Säule steht. Am Grundrahmen 6 ist ein Drehantrieb 9 gelagert, der über ein angetriebenes Ritzel 10 die Tragsäule um ihre Vertikalachse dreht. Das Ritzel 10 steht im Zahneingriff mit einem Außenzahnkranz 11 der Kugeldrehverbindung. Ein flaches Zwischenstück 12 stellt die Verbindung zwischen dem Drehgestell 8 und dem unteren Tragelement 4 her.

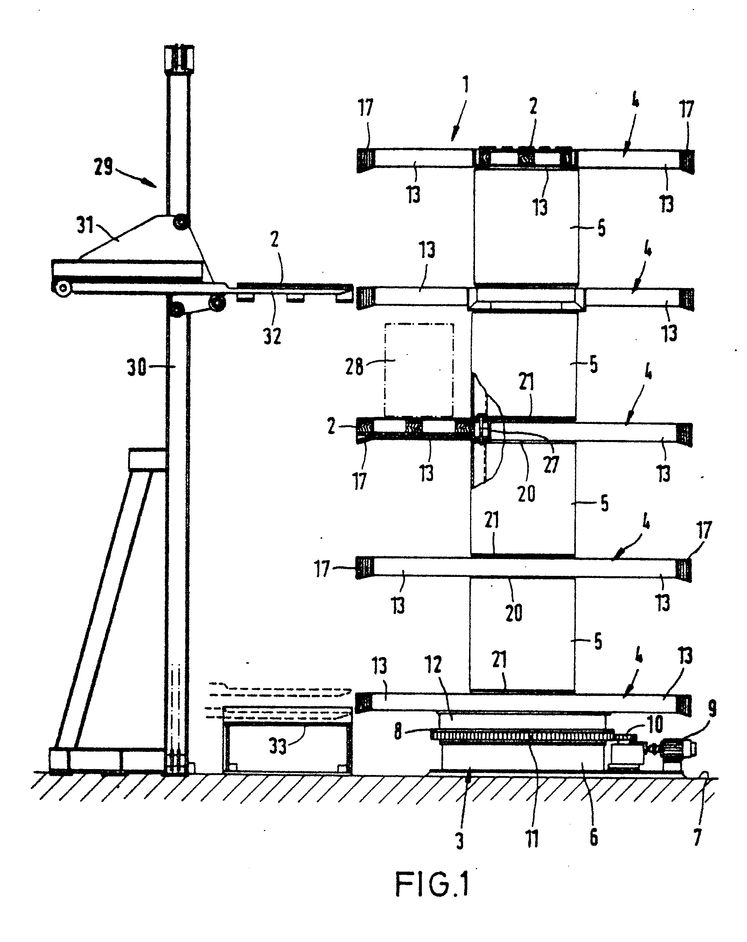

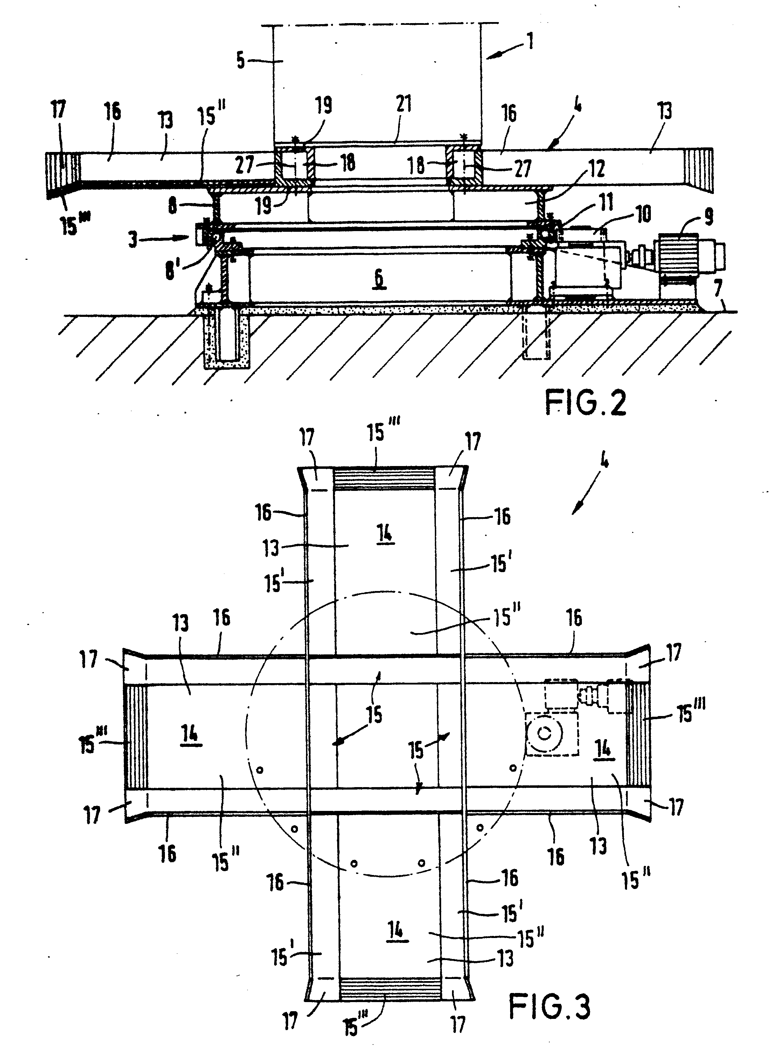

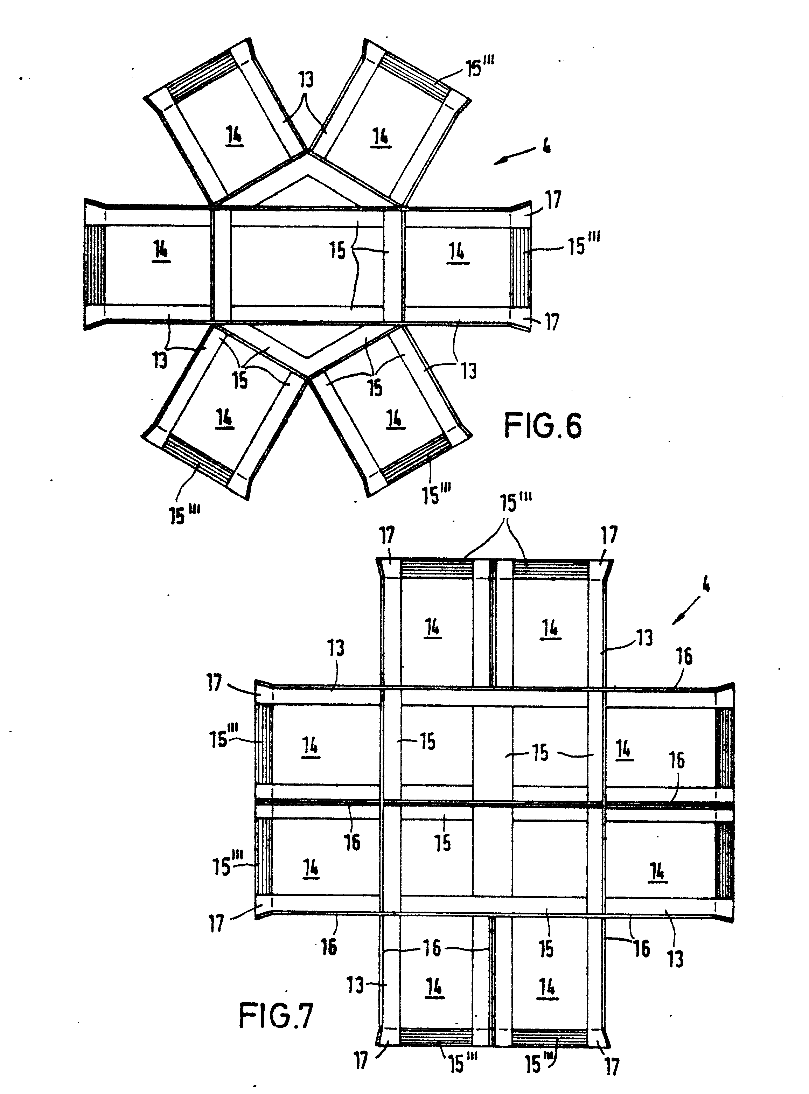

Die Tragelemente 4 weisen jeweils mehrere radial zur Säulenachse nach außen gerichtete, die Paletten-Stellplätze bildende Tragarme 13 auf. Dabei sind die Tragarme 13, wie in Fig. 3 gezeigt, kreuzförmig oder, wie aus Fig. 6 erkennbar, sternförmig angeordnet. Bei der Ausführungsform nach den Fig. 1 und 3 weist demgemäß jedes Tragelement 4 vier um jeweils 90° gegeneinander versetzte Tragarme 13 auf, die jeweils einen Paletten-Stellplatz 14 bilden. Im Unterschied hierzu sind bei der Ausführungsform nach Fig. 7 an jedem der vier Tragarme 13 der Tragelemente 4 jeweils zwei Paletten-Stellplätze 14 parallel nebeneinander angeordnet. Fig. 6 zeigt die sternförmige Anordnung von sechs um jeweils 60° winkelversetzt angeordneten Tragarmen 13, die hier jeweils einen Paletten-Stellplatz 14 bilden.

Bei allen vorgenannten Ausgührungsformen bestehen die Tragelemente 4 aus in Kasten-bzw. Rahmenbauweise miteinander verschweißten Profilleisten 15, vorzugsweise solchen mit Winkelprofilen. Die Profilleisten 15 bilden mit den aufragenden Schenkeln der Winkelprofile an jedem Paletten-Stellplatz 14 zwei im Seitenabstand zueinander angeordnete, parallele vertikale Seitenwände 16 und mit den horizontalen Schenkeln 15' der Winkelprofile und zwischen diese Schenkel 15' eingeschweißten Blechen 15" Tragflächen, auf denen sich die betreffende Pallete 2 abstützt. An den Paletten-Stellplätzen 14 sind demgemäß die Tragarme 13 nach Art von Regalfächern ausgebildet, wobei die Seitenwände 16 Seitenführungen beim Einführen und Herausführen der Paletten bilden. Die Tragarme 13 weisen an der Einführungsseite der Paletten-Stellplätze 14 besondere Einführungsstücke 17 auf, vorzugsweise in Gestalt von Gußstücken, welche vor die Enden der Profilleisten 15 geschweißt sind und die an jedem Tragarm durch das im Einlaufbereich bei 15'" nach unten abgekantete Blech 15" verbunden sind. Die Einführungsstücke 17 sind so ausgebildet, daß sie sich in Seitenrichtung und zur Unterseite hin nach außen trichterförmig erweitern, wodurch in Verbindung mit den Blechabkantungen 15'" sich trichterförmig erweiternde Einführungsöffnungen für das Einführen der Paletten² in die Paletten-Stellplätze 14 gebildet werden.

Im mittleren Bereich der Tragelemente 4 sind die sie bildenden Profile durch miteinander verschweißte Winkelprofile zu Kastenprofilen 18 ausgesteift, wie insbesondere Fig. 2 erkennen läßt. Dadurch werden an der Ober-und Unterseite der Tragelemente 4 ebene Anlageflächen 19 für die Anlage und Montage der Zwischenteile 5 geschaffen.

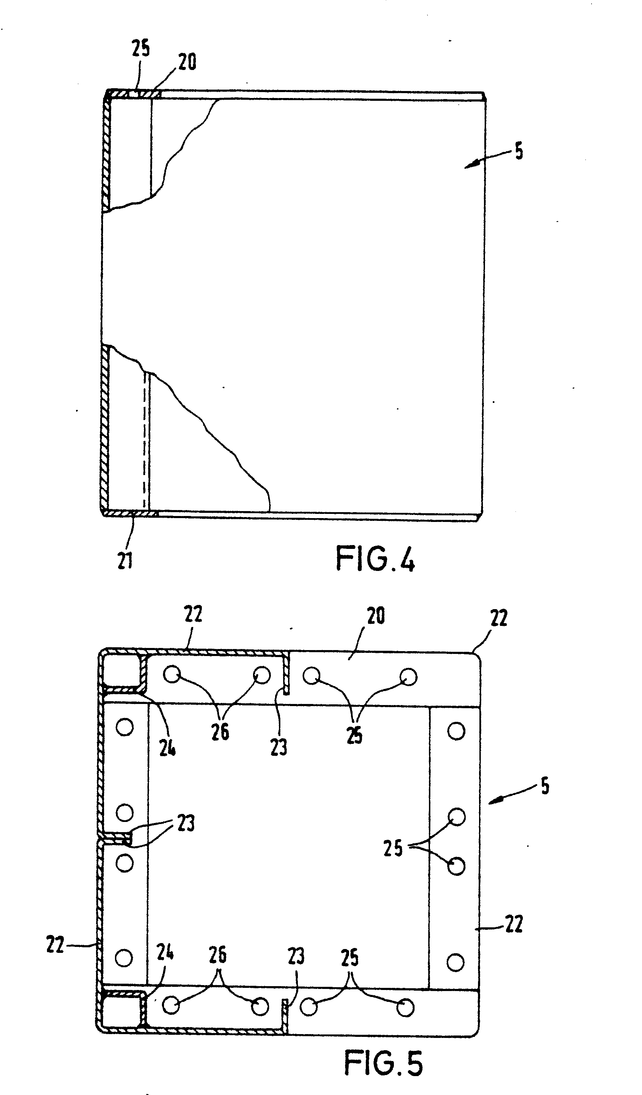

Die Zwischenteile 5 bestehen aus formstabilen Rohrabschnitten oder, wie dargestellt, aus Tragkästen, die am oberen und unteren offenen Ende jeweils mit einem von einem Innenflansch gebildeten Montageflansch 20 bzw. 21 versehen sind. In den Fig. 4 und 5 ist eine zweckmäßige Ausgestaltungsform eines kastenförmigen Zwischenteils 5 dargestellt. Dieses besteht aus vier gleichen Winkelblechen 22, die jeweils eine der vier Kastenecken bilden und die an den freien Enden ihrer Schenkel nach innen gerichtete, rechtwinklige Abkantungen 23 aufweisen, an denen sie miteinander verschweißt sind. Die Ecken der Winkelbleche 22, welche die Kastenecken bilden, sind durch eingeschweißte Profilleisten 24 mit Winkelprofil ausgesteift. An der Ober-und Unterseite sind die nach innen weisenden Montageflansche 20 und 21 angeschweißt. Der obere Montageflansch 20 ist mit Schraubenlöchern 25 versehen, die als Gewindelöcher ausgeführt sind. Der untere Flansch 21 weist in entsprechender Verteilung gewindefreie Schraubenlöcher 26 auf. Die Tragelemente 4 sind an ihren oberen und unteren horizontalen Anlageflächen 19 mit Schraubenlöchern versehen, die ebenfalls als gewindefreie Durchgangslöcher ausgeführt sind. Die Schraubenverbindung der Tragelemente 4 und der Zwischenteile 5 erfolgt, wie in Fig. 1 dargestellt, mittels Schrauben 27, die von oben durch die Schraubenlöcher am unteren Montageflansch 21 eines Zwischenteils 5 sowie durch die fluchtenden gewindefreien Schraubenlöcher an den Anlageflächen 19 des Tragelements 4 hindurchgesteckt und mit ihrem Gewinde in die Gewindebohrungen 25 am oberen Montageflansch 20 des unteren Zwischenteils 5 einge schraubt werden. Es empfiehlt sich, den oberen Flansch 20, der die Gewindelöcher 25 trägt, in der Dicke etwas stärker zu bemessen als den unteren Flansch 21, der lediglich gewindefreie Durchgangslöcher 26 aufweist.

Mit Hilfe der obengenannten Schraubenverbindungen läßt sich eine Tragsäule bzw. ein Drehturm von unterschiedlicher Höhe und mit unterschiedlicher Anzahl an Tragelementen 4 errichten, wobei diese Tragelemente ebenfalls, wie erwähnt, unterschiedlich gestaltet sein können. Die Höhe der kastenförmigen Zwischenteile 5 kann in Anpassung an die Höhe der einzulagernden beladenen Paletten 2 unterschiedlich gewählt werden. In Fig. 1 ist eine einzige Palette 2 mit einem darauf befindlichen Lagergut 28, welches z.B. ein Getriebe, ein Werkstück, ein Antriebs-oder Reserveteil od.dgl. sein kann, angedeutet. Es versteht sich, daß innerhalb der Tragsäule Zwischenteile 5 unterschiedlicher Höhe verwendet werden können. Jedes Zwischenteil 5 kann auch aus zwei oder mehreren Einzelteilen bestehen, die sich in beliebiger Anzahl aufeinandersetzen und miteinander verbinden lassen, um die jeweils gewünschte Höhe des Zwischenteils 5 zu erhalten.

Wie Fig. 1 zeigt, kann der Tragsäule bzw. dem Drehturm eine Be-und/oder Entladevorrichtung 29 zugeordnet sein, insbesondere dann, wenn keine Gabelstapler zur Verfügung stehen, die die erforderliche Hubhöhe für die Beschickung der Tragsäule mit den beladenen Paletten 2 oder für die Entnahme der beladenen Paletten 2 aus der Tragsäule haben. Die Vorrichtung 29 besteht aus einem senkrecht angeordneten Führungsrahmen 30, der eine Vertikalführung für einen Hubwagen 31 bildet, der z.B. über einen Kettenantrieb mit Getriebe und regelbarem Motor für Schnell-und Schleichfahrt antreibbar ist. Im Hubwagen 31 ist ein aus zwei Tragarmen 32 bestehender Palettenträger 32 nach Art eines Schlittens oder Laufwagens in horizontaler Richtung zur der Tragsäule 1 hin und in Gegenrichtung beweglich gelagert. Der hierfür vorgesehene Vorschubantrieb besteht z.B. aus einem Zahnstangentrieb, einem Spindeltrieb oder aus einem Schubkolbengetriebe.

Zu Beginn des Beladevorgangs ist der Hubwagen 31 abgesenkt, so daß sich die Tragarme 32 in ihrer unteren Endlage befinden. Eine beladene Palette wird seitlich auf einen Stützbock 33. od.dgl. abgelegt, der sich zwischen der Beladevorrichtung 29 und dem Drehturm 1 befindet. Der Drehturm 1 ist in eine solche Position gedreht, daß der zu beladende Stellplatz 14 gegenüber der Beladevorrichtung 29 positioniert ist. Der Hubwagen beginnt seine Aufwärtsbewegung im Schleichgang, übernimmt dabei die beladene Palette von dem Stützbock 33 und beschleunigt nach einer vorgegebenen Strecke auf Höchstgeschwindigkeit. Das Positionieren des Hubwagens nach Erreichen der Einlagerungsebene erfolgt über Schleichfahrt derart, daß sich die unterkante der auf den Ladearmen 32 ruhenden Palette 2 einige wenige Zentimeter über der Stellplatzebene befindet. Anschließend wird der Vorschubantrieb der Tragarme 32 eingeschaltet, wodurch die Tragarme 32 mit der Palette 2 über dem ausgewählten Stellplatz 14 positioniert werden. Durch Absenken des Hubwagens 31 um ein vorgegebenes Maß wird dann die Palette 2 dem Stellplatz 14 übergeben. Nach Zurückfahren der Tragarme 32 kehrt der Hubwagen 31 in die untere Endlage zurück.

Mit Hilfe der vorstehend beschriebenen Beladevorrichtung 29 lassen sich in entsprechender Weise auch die im Drehturm eingelagerten Paletten wieder entnehmen.

Bei der Ausführungsform nach Fig. 1 ist die Beladevorrichtung 29 seitlich neben dem Drehturm 1 fest montiert. Es ist aber auch möglich, die Vorrichtung 29 fahrbar so anzuordnen, daß sich mit ihr mehrere im Abstand zueinander aufgestellte Tragsäulen bzw. Drehtürme 1 bedienen lassen. In diesem Fall wird die Belade-und/oder Entladevorrichtung 29 zweckmäßig auf Schienen verlagert.

Die beschriebene Einrichtung ermöglicht eine Automatisierung. Dabei können die einzelnen Stellplätze 14 fortlaufend numeriert werden. Die Belegung der Stellplätze kann zentral gespeichert werden. Der hierfür verwendete Computer kann zugleich zur Steuerung der Be-und Entladevorrichtung 29 und des Drehantriebs 9 des Drehturmes 1 dienen.

Die vorstehend beschriebene Einrichtung ist, wie erwähnt, bevorzugt für das Einlagern von beladenen Paletten 2 bestimmt und geeignet. Sie kann aber auch für die Einlagerung anderer Lagergüter, z.B. zum Einlagern von Containern bestimmter Abmessungen, von Coils u.dgl. Verwendung finden. Zum Ein-und Auslagern können auch mehrere Vorrichtungen 29 vorgesehen werden, von denen mindestens eine zum Einlagern und mindestens eine zum Auslagern dienen kann.

## Ansprüche

1. Einrichtung zur Lagerung von Paletten und sonstigen Lagergütern, mit übereinander angeordneten Regalfächern, **dadurch gekennzeichnet,** daß sie als Tragsäule (1) ausgebildet ist, die in mehreren Etagen übereinander Tragelemente (4) aufweist, die um die Säulenachse herum gruppierte Stellplätze (14) für die Paletten od.dgl. bilden.

2. Einrichtung nach Anspruch 1, **dadurch gekennzeichnet,** daß die Tragsäule (1) als ein um die Vertikalachse drehbarer Drehturm ausgebildet ist.

3. Einrichtung nach Anspruch 2, **dadurch gekennzeichnet,** daß die Tragsäule (1) auf einem Drehgestell (8) steht.

4. Einrichtung nach Anspruch 3, **dadurch gekennzeichnet,** daß das Drehgestell (8) über eine Kugeldrehverbindung (8') mit einem Grundrahmen (6) verbunden ist, wobei ein Drehantrieb (9) mit einem angetriebenen Ritzel (10) vorgesehen ist, das im Zahneingriff mit einem Zahnkranz (11) am Drehgestell (8) steht.

5. Einrichtung nach einem der Ansprüche 1 bis 4, **dadurch gekennzeichnet,** daß die Tragsäule (1) aus achsgleich übereinander angeordneten Zwischenteilen (5) und den zwischen diesen eingeschalteten Tragelementen (4) besteht.

6. Einrichtung nach Anspruch 5, **dadurch gekennzeichnet,** daß die Tragelemente (4) und die Zwischenteile (5), vorzugsweise durch Schraubverbindungen (27), lösbar miteinander verbunden sind.

7. Einrichtung nach Anspruch 5 oder 6, **dadurch gekennzeichnet,** daß die Zwischenteile (5) aus formstabilen Tragkästen oder Rohrabschnitten bestehen.

8. Einrichtung nach Anspruch 7, **dadurch gekennzeichnet,** daß der Tragkasten bzw. der Rohrabschnitt des Zwischenteils (5) am oberen und unteren Ende jeweils mit einem Montageflansch (20, 21), vorzugsweise in Gestalt eines Innenflansches, versehen ist.

9. Einrichtung nach Anspruch 7 oder 8, **dadurch gekennzeichnet,** daß das kastenförmige Zwischenteil (5) aus vier gleichen Winkelblechen - (22) gebildet ist, die zu dem Tragkasten verschweißt sind.

10. Einrichtung nach Anspruch 9, **dadurch gekennzeichnet,** daß die Kastenecken des Tragkastens durch eingeschweißte Profilleisten (24), vorzugsweise Winkelprofile, ausgesteift sind.

11. Einrichtung nach einem der Ansprüche 8 bis 10, **dadurch gekennzeichnet,** daß die Montageflansche (20, 21) der Zwischenteile (5) mit Schraubenlöchern (25, 26) versehen sind.

12. Einrichtung nach einem der Ansprüche 1 bis 11, **dadurch gekennzeichnet,** daß die Tragelemente (4) mit radial zur Säulenachse gerichteten, die Stellplätze (14) für Paletten (2) oder sonstige Lagergüter bildenden Tragarmen (13) versehen sind.

13. Einrichtung nach Anspruch 12, **gekennzeichnet durch** eine kreuz-oder sternförmige Anordnung der Tragarme (13).

14. Einrichtung nach Anspruch 12 oder 13, **dadurch gekennzeichnet,** daß an den Tragarmen (13) jeweils zwei oder mehr Stellplätze (14) parallel nebeneinander angeordnet sind.

15. Einrichtung nach einem der Ansprüche 1 bis 14, **dadurch gekennzeichnet,** daß die Tragelemente (4) aus in Kastenbauweise verschweißten Profilleisten (15), vorzugsweise mit Winkelprofil, bestehen.

16. Einrichtung nach einem der Ansprüche 1 bis 15, **dadurch gekennzeichnet,** daß die Tragelemente (4) an ihrer Ober-und Unterseite ebene Anlageflächen (19) für die Zwischenteile (5) bzw. deren Montageflansche (20, 21) aufweisen.

17. Einrichtung nach Anspruch 16, **dadurch gekennzeichnet,** daß die Tragelemente (4) an ihren Anlageflächen (19) durchgehende Schraubenlöcher für den Durchgriff von Verbindungsschrauben (27) aufweisen, die die übereinanderliegenden Zwischenteile (5) und die dazwischenliegenden Tragelemente (4) miteinander verbinden.

18. Einrichtung nach einem der Ansprüche 1 bis 17, **dadurch gekennzeichnet,** daß die Tragelemente (4) an den Stellplätzen (14) durch aufragende parallele Seitenwände (16) gebildete Regalfächer aufweisen.

19. Einrichtung einem der Ansprüche 1 bis 18, **dadurch gekennzeichnet,** daß die Tragelemente (4) an der Einführungsseite der Stellplätze (14) sich nach außen etwa trichterförmig erweiternde Einführungsstücke (17), vorzugsweise aus Metallguß, aufweisen.

20. Einrichtung nach Anspruch 19, **dadurch gekennzeichnet,** daß die Einführungsstücke (17) an den Enden der Profilleisten (15) befestigt sind, deren einander zugewandte Profilschenkel durch Bleche (15") verbunden sind, die an ihren zwischen den Einführungsstücken (17) liegenden Enden - (15''') schräg nach unten abgekantet sind.

21. Einrichtung nach einem oder mehreren der Ansprüche 1 bis 20, **dadurch gekennzeichnet,** daß der Tragsäule (1) eine Be-und/oder Entladevorrichtung (29) zugeordnet ist, die aus einem an einer Vertikalführung (30) geführten Hubwagen - (31) besteht, der mindestens einen horizontalbeweglichen Tragarm (32) aufweist.

22. Einrichtung nach Anspruch 21, **dadurch gekennzeichnet,** daß die Be-und/oder Entladevorrichtung (29) verfahrbar ist.

FIG.1

FIG.2

FIG.3

FIG.4

FIG.5

Ut 116

FIG.6

FIG.7

Ut 116

Europäisches
Patentamt

**EUROPÄISCHER RECHERCHENBERICHT**

Nummer der Anmeldung

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| | **EINSCHLÄGIGE DOKUMENTE** | | EP 86111462.7 |
| X | US - A - 3 456 817 (IRAZOQUI) | 1-3,12, 13 | B 65 G 1/06 |
| Y | * Gesamt * | 21,22 | |
| | -- | | |
| Y | DE - A1 - 3 121 842 (ALLWEYER) | 21,22 | |
| | * Gesamt * | | |
| | -- | | |
| P,X | FR - A1 - 2 570 684 (DUDWEILER GMBH) | 1-3,5-7,12, 13 | |
| | * Gesamt; insbesondere Fig. 1,2 * | | |
| A | | 8-10, 15,16, 21,22 | |
| | -- | | |
| P,X | FR - A1 - 2 565 952 (REDOUTE CATALOGUE) | 1-3,18 | RECHERCHIERTE SACHGEBIETE (Int. Cl.4) |
| A | * Gesamt; insbesondere Fig. 1,2 * | 21,22 | B 65 G 1/00 |
| | -- | | B 66 F 9/00 |
| X | EP - A1 - 0 005 169 (M.A.N.) | 1-3 | |
| | * Gesamt * | | |
| A | | 4,5 | |
| | ---- | | |

Der vorliegende Recherchenbericht wurde für alle Patentansprüche erstellt.

| Recherchenort | Abschlußdatum der Recherche | Prüfer |
|---|---|---|
| WIEN | 26-11-1986 | PISSENBERGER |